# EUROPEAN PATENT SPECIFICATION

(11) **EP 0 633 297 B1**
(45) Date of publication and mention of the grant of the patent: **27.05.1998**
(21) Application number: 94304834.8
(22) Date of filing: 01.07.1994
(51) Int. Cl.: C09C 1/64

(54) **Aluminium Pigments**
Aluminiumpigmente
Pigments d'aluminium

(30) Priority: 05.07.1993 JP 165648/93; 24.06.1994 JP 142819/94
(43) Date of publication of application: 11.01.1995
(73) Proprietor: TOYO ALUMINIUM KABUSHIKI KAISHA, Osaka-shi Osaka-fu (JP)
(72) Inventor: Yamamoto, Takashi, Tokyo (JP); Uenishi, Masatoshi, Osaka-fu (JP); Katoh, Haruzo, Hyogo-ken (JP); Setoguchi, Shunichi, Hara-ken (JP)
(74) Representative: Woods, Geoffrey Corlett

(56) References cited:
- EP-A- 0 133 644
- EP-A- 0 206 140
- EP-A- 0 583 919
- GB-A- 2 053 258
- DATABASE WPI Week 9252, Derwent Publications Ltd., London, GB; AN 92-426415 & JP-A-4 318 181 (NIPPON PAINT) 9 November 1992
- DATABASE WPI Week 8513, Derwent Publications Ltd., London, GB; AN 85-077465 & JP-A-60 029 401 (PENTEL) 14 February 1985

## Description

The present invention relates to aluminium pigments which may be incorporated into water base paints used for finish coating, for example, car bodies as well as to water base paints and inks.

Aluminium pigments to be incorporated in water base paints and water base inks are described in many prior publications.

JP-B-59009729 describes a treatment of aluminium flakes with an aqueous solution containing phosphoric acid or its salt so as to obtain an aluminium pigment. By this treatment, an aluminium pigment in which the production of hydrogen gas by the reaction of the aluminium flakes with water is inhibited can be obtained. This treatment however has important defects. The resultant coating has a poor colour tone and the colour tone of the coating is spoiled when the coating is dipped in hot water. JP-B-85008057 describes the treatment of the aluminium flakes with a phosphate ester having C₆ or greater alkyl group(s) so as to obtain the aluminium pigment. By this treatment, an aluminium pigment in which the production of hydrogen gas is inhibited and which has a good colour tone can be obtained. This treatment however has another important defect. The aluminium pigment has a very poor adhesion to a resin contained in the water base paint.

Treatment of the aluminium flakes with acid phosphate esters modified with organic functional groups so as to obtain aluminium pigments are also described in many prior publications. For example, JP-A-85015466 describes the treatment of the aluminium flakes with a phosphate ester modified with an aromatic ring-containing functional group and an amino group, but this treatment cannot give a satisfactory improvement in the adhesion of the aluminium pigment to the resin. JP-B-90015590 describes the treatment of the aluminium flakes with a phosphate ester having a carboxyl group at its terminal, but the inhibition of the production of hydrogen gas and the improvement in the adhesion of the aluminium pigment are insufficient.

JP-B-89054386 describes the treatment of the aluminium flakes with chromic acid so as to obtain an aluminium pigment. By this treatment, an aluminium pigment which has a good stability in the water base paint, in which the production of hydrogen gas is inhibited and which has excellent colour tone can be obtained. The adhesion of the aluminium pigment with the resin can also be improved. When the aluminium pigment comprises fine aluminium flakes, however, this treatment causes the dissolution of the fine aluminium flakes due to the high reactivity of chromic acid. Thus, an aluminium pigment comprising fine aluminium flakes having an average particle size (D₅₀) of less than 20 µm can hardly be obtained. Further, this treatment causes industrial hygienic and environmental problems due to the use of Cr(VI), and therefore its application is limited.

As described above, there is no prior art which can provide an aluminium pigment which is suitable for incorporation in the water base paint used for finish coating a car body and which has excellent colour tone, stability in the water base paint and coating property.

EP-A-583,919 discloses aluminium flakes coated with molybdic acid in an amount of 0.1 to 10% by weight in terms of Mo based on Al.

JP-A-4318181 discloses a treatment solution for providing aluminium with good oxidation resistance which contains an oxidizing agent, e.g. molybdic acid, phosphate ions and alkaline earth metal ions.

The present invention seeks to provide an aluminium pigment which is suitable for incorporation in the water base paint used for finish coating a car body and which has excellent stability in the water base paint, colour tone of the coating and adhesion with the resin in the water base paint.

Accordingly, the present invention provides an aluminium pigment comprising aluminium flakes, the surfaces of which are coated with a film of molybdic acid in an amount of 0.1 to 10% by weight in terms of Mo based on the aluminium, and further coated with a phosphoric film derived from a phosphoric compound selected from inorganic phosphoric acids, organic phosphoric acid esters having one phosphate group and their salts in an amount of 0.05 to 1% by weight in terms of P based on the aluminium.

The present invention also provides a water base metallic paint or ink comprising the aluminium pigment as defined above.

The present invention additionally provides an article coated with a metallic coating film comprising the aluminium pigment as defined above.

The present invention further provides a process for preparing an aluminium pigment as defined above which comprises treating aluminium flakes with an alkaline aqueous solution of ammonium molybdate to form the film of molybdic acid on the aluminium flakes, and subsequently treating the thus coated aluminium flakes with a solution containing the phosphoric compound to form the film derived from a phosphoric compound.

As the aluminium flakes to be treated, aluminium flakes having an excellent colour tone, that is aluminium flakes having a rich metallic luster and an average particle diameter (D₅₀) of 1 to 50 µm, preferably 10 to 30 µm, can be used. These aluminium flakes are produced by grinding or milling using a grinding agent in the presence of a grinding medium in a suitable device such as a ball mill or an attritor mill. As the grinding agent, a higher fatty acid such as oleic acid, stearic acid, isostearic acid, lauric acid, palmitic acid and myristic acid; an aliphatic amine; an aliphatic amide; or an aliphatic alcohol is generally used. As the grinding medium, a mineral oil having a high flash point such as mineral spirit and solvent naphtha is generally used.

Desirably, the aluminium flakes to be treated are previously dispersed in a water-soluble solvent mentioned below so that they are easily wet with the alkaline aqueous solution containing ammonium molybdate as a treating solution. In case that the grinding medium is incompatible with the treating solution, the grinding medium should be replaced with the water-soluble solvent prior to the first treatment with the ammonium molybdate.

The ammonium molybdate is ortho-, meta- or para-molybdate. An alkali or alkaline earth metal molybdate which is also water-soluble is not preferable for the treatment of the aluminium flakes, because of its high alkaline strength. Further, if the alkali or alkaline earth metal remains in the film, the remaining alkali or alkaline earth metal may affect the coating properties. In the preparation of the treating solution, ammonium molybdate is preferably dissolved in a mixture of water and the water-soluble solvent so that it is contained at a concentration of a few percent or less. The water-soluble solvent is essential for effecting the contact of the aluminium flakes and the ammonium molybdate.

The water-soluble solvent includes ethylene glycol monobutyl ether (butyl cellosolve), diethylene glycol monobutyl ether, propylene glycol monomethyl ether, propylene glycol monopropyl ether and isopropyl alcohol.

When the aluminium flakes are contacted with the treating solution, the treating solution should be alkaline. In general, the pH of the treating solution is 7 to 10, preferably 7.5 to 9.5 and more preferably 8 to 9. When the pH is less than 7, the reaction of aluminium with ammonium molybdate proceeds very slowly, perhaps due to the presence of the grinding agent such as the fatty acid adsorbed on the surfaces of the aluminium flakes. Of course, when the treating solution has an acidic pH which is out of the passive zone, dissolution of the aluminium happens. On the other hand, when the pH of the treating solution is above 10, a rapid reaction happens and, as a result, an aluminium pigment having excellent colour tone cannot be obtained.

The first treatment with ammonium molybdate is completed by removing the water and unreacted reactants from the reaction system. After the first treatment has been completed, the reaction product is washed and filtered.

The amount of the resultant film of molybdic acid is 0.1 to 10 % by weight, preferably 0.1 to 3 % by weight, in terms of Mo based on the aluminium. When it is less than the lower limit, the inhibition of hydrogen gas production is insufficient. On the other hand, when it is above the upper limit, the film is too thick and, as a result, the colour tone is impaired.

After the first treatment, the aluminium flakes are subjected to a second treatment with the phosphoric compound to form the phosphoric film on the first-treated aluminium flakes. The second treatment comprises treating the aluminium flakes, which have the film of molybdic acid formed by the first treatment with ammonium molybdate, with a solution containing the phosphoric compound. When the first-treated aluminium pigment contains water, the water is desirably replaced with the water-soluble solvent prior to the second treatment.

The phosphoric compound used as the second treating agent in the second treatment is an inorganic phosphoric acid, organic phosphoric acid ester having one phosphate group and their salts. The phosphoric acid compound known as an agent for improving the corrosion resistance of the aluminium pigment is usable, but its alkali or alkaline earth metal salt is not preferable for the treatment of the aluminium flakes, because of its high alkaline strength. Further, if the alkali or alkaline earth metal remains in the film, the remaining alkali or alkaline earth metal may affect the coating properties.

As the inorganic phosphoric acid, ortho-, pyro- and polyphosphoric acids are exemplified. As the inorganic phosphate salt, ammonium hydrogenphosphate, ammonium dihydrogenphosphate and basic manganous phosphate are exemplified.

Examples of the organic acid phosphoric acid esters are methyl acid phosphate, ethyl acid phosphate, isopropyl acid phosphate, butyl acid phosphate, hexyl acid phosphate, oleyl acid phosphate, lauryl acid phosphate, stearyl acid phosphate, octyl acid phosphate, cyclohexyl acid phosphate, phenyl acid phosphate, nonyl phenyl acid phosphate and triphenyl phosphite. The acid group in the organic phosphoric acid ester plays an important role when the ester is adsorbed on the surfaces of the films of molybdic acid.

Because of the presence of the acid group, a salt of the organic phosphoric acid ester can be adsorbed on the films of molybdic acid, like the organic phosphoric acid ester. However, the use of the salt of the organic phosphoric acid ester having many acid groups is not preferable, because the phosphate groups remain in an unadsorbed condition near the resultant phosphoric films. Also, the use of a neutral salt of the organic phosphoric acid ester is not preferable, because the neutral salt has no active site since the acid groups are completely neutralized and therefore is hardly adsorbed on the film of molybdic acid. The particularly preferable salt of the organic phosphoric acid ester is an acid salt of the organic phosphoric acid ester, whereby the production of the unadsorbed phosphate groups is controlled and the adsorption of the salt on the films of molybdic acid is possible due to the presence of the acid groups. It is presumed that the amount of unadsorbed phosphate group near the phosphoric films resulting from the use of the acid salt of the organic phosphoric acid ester is small. The base which forms the acid salt of the organic phosphoric acid ester includes organic amines, preferably a primary or secondary amine having a total carbon number of 3 to 36 such as butyl amine, dibutyl amine, hexyl amine, dihexyl amine, octyl amine, dioctyl amine, decyl amine, didecyl amine, lauryl amine, dilauryl amine, myristyl amine, dimyristyl amine, oleyl amine and stearyl amine, because the use of the salt of the organic acid phosphate ester with the fatty amine can show a remarkable improvement in the coating properties, especially the resistance to hot water, as demonstrated in the following Examples. Although the reason that the coating properties are remarkably improved by the use of the above salt is not clearly elucidated at present, it is perhaps due to the fact that unadsorbed phosphate groups present near the phosphoric films can be reacted with the fatty amine, thus neutralizing and deactivating the phosphate groups. It is expected that the improvement in the coating properties can be obtained by the post-addition of a suitable amount of the fatty amine after the organic phosphoric acid ester is adsorbed on the films of molybdic acid. A highly basic amine including tertiary amine is not preferable, because it makes the paint unstable.

The method for treating the first-treated aluminium flakes with the second treating agent depends on the nature of the second treating agent. When the second treating agent is a phosphoric compound insoluble in the organic solvent and soluble in water, such as the phosphate salt, the first-treated aluminium flakes are treated with an aqueous solution containing the second treating agent. The thus-treated aluminium flakes are desirably separated from the aqueous solution and washed with an organic solvent miscible with water. By washing with the organic solvent miscible with water, the water-soluble phosphoric acid compound can be uniformly and firmly deposited and fixed on the surfaces of the aluminium flakes, and free phosphate ions, which lower the resistance of the coating to hot water, can be removed. When the second treating agent is a phosphoric compound soluble in the organic solvent, such as orthophosphoric acid and butyl acid phosphate, the first-treated aluminium flakes are treated with the solution containing the second treating agent in the organic solvent such as isopropyl alcohol and toluene. Desirably, the organic solution is added to the first-treated aluminium flakes and then kneaded.

The amount of the resultant phosphoric film is 0.05 to 1 % by weight, preferably 0.1 to 0.5 % by weight, in terms of P based on the aluminium. When it is less than the lower limit, the inhibition of hydrogen gas production is insufficient. On the other hand, when it is above the upper limit, the resultant coating has inferior resistance to hot water and adhesion.

Generally, the aluminium pigment of the present invention contains the water-soluble solvent having a high boiling point as a volatile component. The water-soluble solvent having a high boiling point includes propylene glycols and ethylene glycols, such as propylene glycol monomethyl ether, triethylene glycol monoethyl ether, propylene glycol monoethyl ether, propylene glycol monopropyl ether, dipropylene glycol monomethyl ether, dipropylene glycol monoethyl ether and ethylene glycol monobutyl ether.

The aluminium pigment of the present invention may be incorporated in any water base paint. The water base resin constituting the water base paint is classified into a water soluble resin, a water dispersible resin and an emulsifiable resin. The nature of the water base resin includes a combination of acrylic and melamine resins, a combination of polyester and melamine resins, urethane resin and CAB resin. The type and the nature of the water base resin to which the aluminium pigment of the present invention may be applied is not limited. Of course, the water base paint in which the aluminium pigment of the present invention is incorporated may be coated by any coating method. The known coating methods such as an air spray coating, an airless spray coating and a roller coating can be used.

According to the present invention, by treating the aluminium flakes with the alkaline aqueous solution containing ammonium molybdate in the first treatment, the oily grease of the grinding agent (generally a fatty acid such as oleic acid and stearic acid) adsorbed on the surfaces of the aluminium flakes can be cleaned away so that the aluminium flakes are exposed substantially without any organic film. As the result, very thin and relatively active films of molybdic acid are formed on the exposed surfaces of the aluminium flakes. Further, because the surfaces of the first-treated aluminium flakes are not contaminated with the oily grease of the grinding agent, the phosphoric compound as the second treating agent effectively acts onto the first-treated aluminium flakes.

According to the present invention, by the first treatment, the aluminium flakes have films of molybdic acid on the surfaces thereof, on which the phosphoric films are deposited during the second treatment. Owing to the combination of the film of molybdic acid and the phosphoric film, the aluminium pigment of the present invention has an excellent advantage with respect to the inhibition of hydrogen gas production by the reaction of the aluminium pigment with water.

When the aluminium flakes are treated with the phosphoric acid compound in an amount sufficient to improve the corrosion resistance, problems of lowering the coating properties, that is the resistance of the coating to hot water and the adhesion of the coating, are found. According to the present invention, the above problems can be resolved by considerably lowering the amount of the phosphoric acid compound used owing to the formation of the films of molybdic acid on the surfaces of the aluminium flakes by the first treatment and therefore the corrosion resistance of the aluminium pigment can be improved without lowering the coating properties. Thus, the aluminium pigment of the present invention is suitable for incorporating in the water base paint used for finish coating car bodies. The aluminium pigment of the present invention can be incorporated in oil paints without any inconvenience.

The aluminium pigment of the present invention which is mainly coated with molybdic acid can be used without environmental problems.

### Examples

The following Examples further illustrate the present invention.

### Examples 1 to 3

Aluminium flakes (Alpaste® 7675NS, D₅₀= 14 µm, produced by Toyo Aluminium K.K.) were weighed so that 200 g in terms of Al were placed in a beaker (3 litres), to which 1 l of propylene glycol monomethyl ether was added followed by stirring at 400 r.p.m. to prepare a dispersion of aluminium flakes. The whole was cooled to 18°C. Independently, 5.0 g of ammonium paramolybdate was dissolved in 200 ml of deionized water to prepare the treating solution. To the dispersion of aluminium flakes, the treating solution was added dropwise and they were reacted for 1 hour at a pH of 8.5 at a liquid temperature of 15 to 20°C while stirring at 400 to 450 r.p.m. The reaction product was decanted with deionized water three times so as to remove NH₄ ions and unreacted ammonium paramolybdate and filtered through a glass filter with suction. Then, the aluminium flakes on the filter were washed with propylene glycol monomethyl ether three times to completely remove the water and finally filtered with suction, to obtain first-treated aluminium flakes.

While filtering the first-treated aluminium flakes on the filter with suction, 400 ml of the aqueous solution containing diammonium hydrogenphosphate at a predetermined concentration was added uniformly to the whole of the first-treated aluminium flakes. The time for contacting the aqueous solution containing diammonium hydrogenphosphate with the first-treated aluminium flakes was controlled using the pressure on the filtration with suction. The concentration of diammonium hydrogenphosphate in the aqueous phosphate solution as the second treating agent and the time for contacting the aqueous phosphate solution with the first-treated aluminium flakes are shown in Table 1.

After completely filtering with suction, butylcellosolve was added in three portions (1 l per portion) to the whole of the second-treated aluminium flakes on the filter to wash the second-treated aluminium flakes. Then, an amount of a nonvolatile matter was controlled with butylcellosolve in a mixer followed by aging at 50°C for 2 days to obtain the aluminium pigment of the present invention.

The resultant aluminium pigment was subjected to quantitative determination in accordance with ICP emission spectrophotometry to determine the Mo amount and the P amount contained, after drying at 250°C for 1 hour. The results are shown in Table 1.

### Examples 4 to 6

To the aluminium flakes subjected to the first treatment in the procedure described in the above Examples, butyl acid phosphate (JP-504, an equimolar mixture of mono- and di-esters, produced by JOHOKU CHEMICAL CO., LTD.) dissolved in butylcellosolve was added in a mixer and kneaded for 30 minutes for the second treatment. The amount added of the phosphate ester as the second treating agent is shown in Table 2.

The resultant aluminium pigment was subjected to quantitative determination in accordance with ICP emission spectrophotometry to determine the Mo amount, after drying at 250°C for 1 hour. The results are shown in Table 2. The P amounts shown in Table 2 are calculated values.

### Example 7

The procedure described in Examples 4 to 6 was repeated, except that the acid salt comprising butyl acid phosphate and lauryl amine (FARMIN® 20D, produced by Kao Corporation) in the same amount by weight was used in place of the butyl acid phosphate. Thereby the aluminium pigment was obtained.

### Comparative Examples 1 to 6

In Comparative Example 1, the aluminium flakes (Alpaste® 7675NS) used as the starting material in the above Examples were used after replacing the water with isopropyl alcohol in order to easily disperse the flakes in the water base paint.

In Comparative Example 2, the aluminium flakes (Alpaste® 7675NS) used as the starting material in the above Examples and which were subjected to only the first treatment in accordance with the procedure described in Example 1 were used.

In Comparative Example 3, the aluminium flakes (Alpaste® 7675NS) used as the starting material in the above Examples were used without the first treatment for the following treatment. That is, to the aluminium flakes, 1.5 parts by weight per 100 parts by weight of the aluminium pigment of butyl acid phosphate (JP-504, produced by JOHOKU CHEMICAL CO., LTD.) dissolved in butylcellosolve was added and kneaded for 30 minutes in accordance with the procedure described in Example 4 after replacing the water with isopropyl alcohol.

In Comparative Example 4, the aluminium flakes (Alpaste® 7675NS) used as the starting material in the above Examples and which were treated in accordance with the procedure described in Example 5, except that the first treatment was omitted and that oleyl acid phosphate was used in place of the butyl acid phosphate, were used.

In Comparative Example 5, the aluminium flakes (Alpaste® 7675NS) used as the starting material in the above Examples and which were treated in accordance with the procedure described in Example 6, except that the first treatment was omitted and that oleyl acid phosphate was used in place of the butyl acid phosphate, were used.

In Comparative Example 6, a commercially available aqueous aluminium paste (Alpaste® WXM7675) was used.

### Test

The stability of the aluminium pigment obtained in each of Examples 1 to 7 and Comparative Examples 1 to 6 in the water base metallic paint and the finish coating prepared from the same paint and the top clear paint were tested.

| Formulation of water base metallic paint for base coating film: | |
|---|---|
| water-soluble acrylic resin neutralized with triethylamine (ALMATEX® WA 911, produced by MITSUI TOATSU CHEMICALS, INC.) | 56.32 g |
| melamine resin (Cymel® 350, produced by MITSUI CYANAMID) | 8.80 g |
| aluminium pigment (as Al) | 6.00 g |
| deionized water | 80.00 g |

The above components were fully stirred and dispersed by hand followed by stirring by a disperser at 1000 rpm for about 10 minutes. Then, the pH was adjusted with 10% triethylamine to 8.6. The viscosity was adjusted with the deionized water to 19 to 20 seconds by the determination using #4 Ford cup.

| Formulation of oily clear paint for top coating film: | |
|---|---|
| acrylic resin (ACRYDIC® A-345, produced by DAINIPPON INK AND CHEMICALS INC.) | 130 g |
| melamine resin (SUPER BECKAMINE® L-117-60, produced by DAINIPPON INK AND CHEMICALS INC.) | 50 g |
| Solvesso® 100 | 70 g |

The above components were dispersed by hand. The viscosity was 20 seconds by the determination using #4 Ford cup.

### Coating method:

A steel plate previously electrodeposited with a primer was coated with the above paints using a SA-71 spray gun (IWATA TOSOKI KOGYO K.K.) and an automatic air coating device Model 310741 (SPRAYMATION INC.). Firstly, the steel plate was coated with the water base metallic paint for base coating film so that the dried film had a thickness of 13µm and then previously dried in an air oven at 90°C for 10 minutes. Next, the oily clear paint for top coating film was coated so that the dried film had a thickness of 40µm followed by baking to cure in the air oven at 160°C for 30 minutes.

### Stability in water base paint

80 grams of the water base metallic paint which was not subjected to the viscosity adjustment was introduced in a flask, which was set on a water bath whose temperature was controlled to 50°C. The cumulative volume of hydrogen gas produced over 10 days was determined. The lower the cumulative volume of hydrogen gas, the higher the stability of the pigment in the paint.

### Initial coating properties

The changes in the colour tone of the coating and the adhesion of the metallic film with the top clear film after the coating were determined.

The colour tone (metallic luster IV value) of the coating was determined using a colour measurement machine (ALCOPE (trade name) Model LMR-100, KANSAI PAINT CO., Ltd.). The adhesion was determined in accordance with ASTM D3359 B (6 ranks). 4B or more is evaluated to be acceptable.

### Resistance to coating in hot water

After the test piece was dipped in hot water at 50°C for 10 days, the adhesion of the metallic film with the top clear film was determined as above.

The change in colour tone of the dipped part with respect to the non-dipped part, i.e. the whitening degree, was determined with the naked eye. No change in colour tone is expressed as " 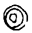 ". No substantial change in colour tone is expressed as "ⓞ". A slight change in colour tone is expressed as "○". A border line is expressed as "Δ". A significant change in colour tone is expressed as "x".

The results are shown in Table 3.

**Table 1**

| | Ex. 1 | Ex. 2 | Ex. 3 |
|---|---|---|---|
| first treated aluminium flakes (NV75%) | 100 pbw | 100 pbw | 100 pbw |
| concentration of aqueous phosphate soln | 1 g/l | 10 g/l | 50 g/l |
| contact period | 2 min | 10 min | 25 min |
| Mo content (wt%) | 0.658 | 0.659 | 0.650 |
| P content (wt%) | 0.064 | 0.223 | 0.784 |
| Al content (%) | 55.0 | 55.0 | 55.0 |
| aqinq condition | 50°C × 2days | 50°C × 2days | 50°C × 2days |
| Aluminium pigment (as Al) | 10.90 (6.0) | 10.90 (6.0) | 10.90 (6.0) |
| varnish A *1) | 56.32 | 56.32 | 56.32 |
| triethylamine | 2.11 | 2.11 | 2 11 |
| varnish B *2) | 8.8 | 8.8 | 8.8 |
| deionized water | 80.0 | 80.0 | 80.0 |
| pH (after adjustment) | 8.6 | 8.6 | 8.6 |
| viscosity (sec) | 19.4 | 19.5 | 19.8 |
| varnish A *1) water-soluble acrylic resin varnish B *2) melamine resin pbw = part(s) by weight | | | |

**Table 2**

| | Ex. 4 | Ex. 5 | Ex. 6 | Ex. 7 |
|---|---|---|---|---|
| first treated aluminium flakes (NV75%) | 100 pbw | 100 pbw | 100 pbw | 100 pbw |
| phosphate ester | 0.3 pbw | 1.5 pbw | 5.0 pbw | - |
| its acid salt | - | - | - | 2.25 pbw |
| Mo content (wt%) | 0.655 | 0.649 | 0.650 | 0.656 |
| P content (wt%) | 0.051 | C.255 | 0.850 | 0.248 |
| Al content (%) | 55.0 | 55.0 | 55.0 | 55.0 |
| aging condition | 50°C × 2days | 50°C × 2days | 50°C × 2days | 50°C × 2days |
| Aluminium pigment (as Al) | 10.90 (6.0) | 10.90 (6.0) | 10.90 (6.0) | 10.90 (6.0) |
| varnish A *1) | 56.32 | 56.32 | 56.32 | 56.32 |
| triethylamine | 2.11 | 2.11 | 2.11 | 2.11 |
| varnish B *2) | 8.8 | 8.8 | 8.8 | 8.8 |
| deionized water | 80.0 | 80.0 | 80.0 | 80.0 |
| pH (after adjustment) | 8.6 | 8.6 | 8.6 | 8.6 |
| viscosity (sec) | 19.4 | 19.5 | 19.8 | 19.5 |
| varnish A *1) water-soluble acrylic resin varnish B *2) melamine resin pbw = part(s) by weight | | | | |

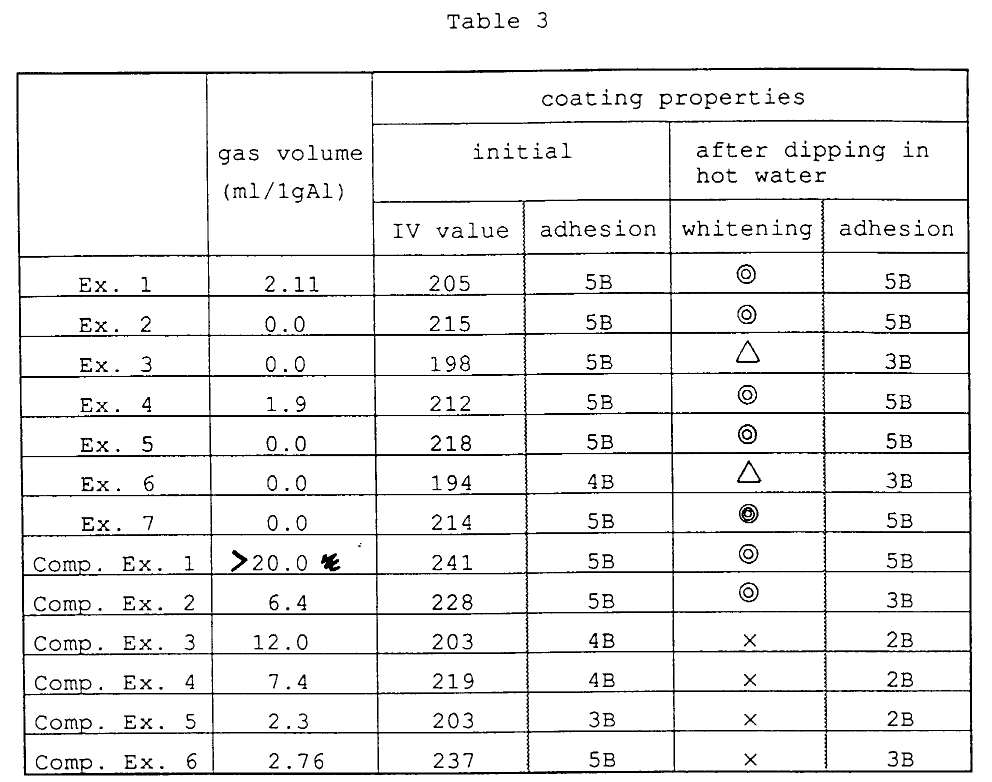

## Claims

1. An aluminium pigment comprising aluminium flakes, the surfaces of which are coated with a film of molybdic acid in an amount of 0.1 to 10% by weight in terms of Mo based on the aluminium, and further coated with a phosphoric film derived from a phosphoric compound selected from inorganic phosphoric acids, organic phosphoric acid esters having one phosphate group and their salts in an amount of 0.05 to 1% by weight in terms of P based on the aluminium.

2. An aluminium pigment according to claim 1, wherein the salt of the organic phosphoric acid ester consists of the organic phosphoric acid ester and a fatty primary or secondary amine.

3. An aluminium pigment according to claim 2, wherein the fatty primary or secondary amine contains 3 to 36 carbon atoms in total.

4. An aluminium pigment according to any one of claims 1 to 3, wherein the phosphate group of the organic phosphoric acid is adsorbed on the film of molybdic acid or reacted with the fatty primary or secondary amine.

5. A water base metallic paint or ink comprising the aluminium pigment as defined in any one of claims 1 to 4.

6. An article coated with a metallic coating film comprising the aluminium pigment as defined in any one of claims 1 to 4.

7. A process for preparing a aluminium pigment as defined in any one of claims 1 to 4, which comprises treating aluminium flakes with an alkaline aqueous solution of ammonium molybdate to form the film of molybdic acid on the aluminium flakes, and subsequently treating the thus coated aluminium flakes with a solution containing the phosphoric compound to form the film derived from a phosphoric compound.

## Patentansprüche

1. Aluminiumpigment, das Aluminiumflocken enthält, deren Oberflächen mit einem Film von Molybdänsäure in einer Menge von 0,1 bis 10 Gew.-%, angegeben als Mo, bezogen auf das Aluminium, beschichtet sind und weiterhin mit einem Phosphatfilm, der von einer Phosphorsäureverbindung abgeleitet ist, die unter anorganischen Phosphorsäuren, organischen Phosphorsäureestern mit einer Phosphatgruppe und deren Salzen ausgewählt ist, in einer Menge von 0,05 bis 1 Gew.-%, angegeben als P, bezogen auf das Aluminium, beschichtet sind.

2. Aluminiumpigment nach Anspruch 1, wobei das Salz des organischen Phosphorsäureesters aus dem organischen Phosphorsäureester und einem primären oder sekundären aliphatischen Amin besteht.

3. Aluminiumpigment nach Anspruch 2, wobei das primäre oder sekundäre aliphatische Amin insgesamt 3 bis 36 Kohlenstoffatome enthält.

4. Aluminiumpigment nach einem der Ansprüche 1 bis 3, wobei die Phosphatgruppe der organischen Phosphorsäure an dem Molybdänsäurefilm adsorbiert oder mit dem primären oder sekundären aliphatischen Amin umgesetzt ist.

5. Metallisches Anstrichmittel oder metallische Farbe auf wäßriger Basis, enthaltend das in einem der Ansprüche 1 bis 4 definierte Aluminiumpigment.

6. Mit einem metallischen Überzugsfilm, der das in einem der Ansprüche 1 bis 4 definierte Aluminiumpigment enthält, beschichteter Gegenstand.

7. Verfahren zur Herstellung eines in einem der Ansprüche 1 bis 4 definierten Aluminiumpigments, welches die Behandlung von Aluminiumflocken mit einer wäßrig-alkalischen Lösung von Ammoniummolybdat unter Bildung eines Films von Molybdänsäure auf den Aluminiumflocken und die nachfolgende Behandlung der so beschichteten Aluminiumflocken mit einer die Phosphorsäureverbindung enthaltenden Lösung unter Bildung des von einer Phosphorsäureverbindung abgeleiteten Films umfaßt.

## Revendications

1. Pigment d'aluminium comprenant des flocons d'aluminium, dont les surfaces sont revètues avec un film d'acide molybdique dans une quantité de 0,1 à 10% en poids en termes de Mo rapportés à l'aluminium, et revêtues en outre avec un film phosphorique dérivé d'un composé phosphorique choisi parmi des acides phosphoriques inorganiques, des esters d'acide phosphorique organique présentant un groupe phosphate et leurs sels dans une quantité de 0,05 à 1% en poids en termes de P rapportés à l'aluminium.

2. Pigment d'aluminium selon la revendication 1, dans lequel le sel de l'ester organique d'acide phosphorique consiste en l'ester organique d'acide phosphorique et en une amine grasse primaire ou secondaire.

3. Pigment d'aluminium selon la revendication 2, dans lequel l'amine grasse primaire ou secondaire contient de 3 à 36 atomes de carbone au total.

4. Pigment d'aluminium selon l'une quelconque des revendications 1 à 3, dans lequel le groupe phosphate de l'acide organique phosphorique est adsorbé sur le film d'acide molybdique ou réagit avec l'amine grasse primaire ou secondaire.

5. Peinture ou encre métallique à base d'eau comprenant le pigment d'aluminium comme défini dans l'une quelconque des revendications 1 à 4.

6. Article revêtu avec un film de revêtement métallique comprenant le pigment d'aluminium comme défini dans l'une quelconque des revendications 1 à 4.

7. Procédé pour la préparation d'un pigment d'aluminium comme défini dans l'une quelconque des revendications 1 à 4, qui comprend le traitement de flocons d'aluminium avec une solution aqueuse alcaline de molybdate d'ammonium pour former le film d'acide molybdique sur les flocons d'aluminium et le traitement subséquent des flocons d'aluminium ainsi revêtus avec une solution contenant le composé phosphorique pour former le film dérivé d'un composé phosphorique.
